# EUROPÄISCHE PATENTANMELDUNG

(11) **EP 3 181 890 A1**
(43) Veröffentlichungstag der Anmeldung: **21.06.2017**
(21) Anmeldenummer: 16200927.8
(22) Anmeldetag: 28.11.2016
(51) Int. Cl.: F02M 57/00, G01L 9/00, G01L 23/14

(54) **SENSORVORRICHTUNG UND KRAFTSTOFFINJEKTOR MIT EINER SENSORVORRICHTUNG**

(30) Priorität: 14.12.2015 DE 102015225047
(71) Anmelder: ROBERT BOSCH GMBH, 70442 Stuttgart (DE)
(72) Erfinder: Beier, Marco, 71229 Leonberg (DE); Forke, Martin, 70499 Stuttgart (DE)

(57) **Zusammenfassung**

Die Erfindung betrifft eine Sensorvorrichtung (30; 30a) zur Erfassung einer Bewegung eines Elements (27), mit einer Einrichtung (36) zur Induktion einer elektrischen Spannung, wobei die Einrichtung (36) zumindest ein in Wirkverbindung mit dem Element (27) angeordnetes erstes Bauteil (37) in Form eines Magnetelements (38) aufweist, das mit wenigstens einem ortsfest angeordneten, als Spulenelement (50; 57, 58) ausgebildeten zweiten Bauteil (49; 49a) zusammenwirkt, wobei die Einrichtung (36) in einem Gehäuse (31; 52) angeordnet ist, das zur zumindest mittelbaren Befestigung an dem Element (27) ausgebildet ist, und wobei das Gehäuse (31; 52) mediendicht ausgebildet ist.

## Beschreibung

### Stand der Technik

Die Erfindung betrifft eine Sensorvorrichtung zur Erfassung einer Bewegung eines Elements. Ferner betrifft die Erfindung einen Kraftstoffinjektor mit einer erfindungsgemäßen Sensorvorrichtung.

Bei Kraftstoffinjektoren ist es zur Ansteuerung der als Einspritzglieds dienenden Düsennadel sinnvoll bzw. erforderlich, den exakten Schließzeitpunkt bzw. Öffnungszeitpunkt des Einspritzglieds möglichst genau zu erfassen. So ist beispielsweise aus der nachveröffentlichten DE 10 2014 222 811 A1 der Anmelderin bekannt, eine derartige Sensorvorrichtung unter Verwendung eines Piezoelements auszubilden. Bei dem bekannten Kraftstoffinjektor wird das Piezoelement unter Zwischenlage einer Klebstoffschicht an der Oberfläche eines Verformungsbereichs eines Injektorgehäuses des Kraftstoffinjektors befestigt. Mittels der Sensorvorrichtung lässt sich zumindest mittelbar der Druck in einer Versorgungsbohrung bzw. in einem Hochdruckraum des Kraftstoffinjektors ermitteln, woraus auf einen Schieß- bzw. Öffnungszeitpunkt des Einspritzglieds (Düsennadel) geschlossen werden kann. Die bekannte Sensorvorrichtung ist im Bereich einer Vertiefung des Injektorgehäuses angeordnet und mittels einer das Piezoelement an seiner der Klebstoffschicht gegenüberliegenden Stirnseite überdeckenden Einrichtung überdeckt. Die Einrichtung dient dazu, auf das Piezoelement eine axiale Vorspannkraft auszuüben, die zum einen die Zuverlässigkeit der Messeinrichtung bzw. des Piezoelements über die Lebensdauer des Kraftstoffinjektors gesehen erhöht, und zum anderen die Funktionalität des Piezoelements insofern verbessert, als dass auf das Piezoelement infolge der Deformation des Verformungsbereichs wirkende Zugspannungen reduziert werden. Hierzu ist die das Piezoelement teilweise überdeckende Einrichtung im Bereich der Vertiefung mit einer Schweißnaht mit dem Injektorgehäuse verbunden, um die benötigte axiale Vorspannkraft auf das Piezoelement zu erzeugen. Um einen Medienzutritt zu dem Piezoelement zu vermeiden, der die Funktionseigenschaften des Piezoelements, insbesondere über die Lebensdauer des Kraftstoffinjektors betrachtet, verschlechtern kann, ist es erforderlich, dass zwischen der Aufnahme bzw. der Vertiefung in dem Injektorgehäuse und der das Sensorelement teilweise überdeckenden Einrichtung eine vollständig umlaufende Schweißnaht ausgebildet wird, die den Bereich des Piezoelements abdichtet. Zusammengefasst ist die aus der genannten Schrift bekannte Sensorvorrichtung relativ komplex ausgebildet und es ist erforderlich, die Sensorvorrichtung zur Abdichtung sehr sorgfältig mit dem Injektorgehäuse zu verbinden. Darüber hinaus ist die Dauerhaltbarkeit von Klebstoffverbindungen über die Lebensdauer eines Kraftstoffinjektors betrachtet, welche typischerweise mit etwa 15 Jahren angenommen werden kann, insbesondere bei relativ ungünstigen Einsatzbedingungen als kritisch zu bewerten.

Aus der DE 10 2014 204 746 A1 der Anmelderin ist es darüber hinaus bekannt, eine Sensorvorrichtung zur Erfassung einer Bewegung des Einspritzglieds, die ebenfalls im Bereich einer Vertiefung einer Hochdruckversorgungsbohrung angeordnet ist, ohne die Verwendung von Klebstoff auszubilden. Zwar findet auch bei dieser bekannten Sensorvorrichtung ein Piezoelement Verwendung, jedoch ist dieses mittels einer Spannvorrichtung gegen die Oberfläche einer Abflachung des Injektorgehäuses axial vorgespannt. Nachteilig dabei ist zum einen, dass durch die Spannvorrichtung die Baugröße des Kraftstoffinjektors in Höhe der Spannvorrichtung vergrößert wird, und dass zum anderen ohne die Verwendung geeigneter Schutzmaßnahmen ein Medienzutritt zu dem Piezoelement möglich ist, was dessen Lebensdauer ggf. beeinträchtigen kann.

### Offenbarung der Erfindung

Ausgehend von dem dargestellten Stand der Technik liegt der Erfindung die Aufgabe zugrunde, eine Sensorvorrichtung zur Erfassung einer Bewegung eines Elements derart auszubilden, dass auf die Verwendung eines Piezoelements sowie einer Klebeverbindung verzichtet werden kann, wobei gleichzeitig ein geschützter Anbau der Sensorvorrichtung ermöglicht werden soll, der den Zutritt von Medien zu dem Bereich der Sensorvorrichtung verhindert. Gleichzeitig soll es das verwendete Meßprinzip erlauben, zuverlässig, schnell und mit hoher Signalstärke die Bewegung des zu detektierenden Elements erfassen zu können.

Diese Aufgabe wird bei einer Sensorvorrichtung zur Erfassung einer Bewegung eines Elements mit den Merkmalen des Anspruchs 1 gelöst. Der Erfindung liegt die Idee zugrunde, anstelle eines Piezoelements zur Erzeugung bzw. Induktion einer elektrischen Spannung eine Kombination aus zumindest einem Spulenelement und einem Magnetelement zu verwenden, wobei bei einer Relativbewegung der beiden Elemente in dem wenigstens einen Spulenelement bzw. der wenigstens einen Magnetspule eine elektrische Spannung induziert wird, anhand deren zeitlichen Verlauf bzw. Höhe auf die Bewegung des zu detektierenden Elements rückgeschlossen werden kann, wobei gleichzeitig ein Gehäuse vorgesehen ist, das die genannten Bauteile der Einrichtung zur Erzeugung der elektrischen Spannung aufnimmt. Dabei ist das Gehäuse mediendicht ausgebildet, d.h. dass auch beispielsweise vorhandene Kabeldurchführungen o.ä. abgedichtet sind, um einen Zutritt von Medien in den Bereich des Innenraums des Gehäuses, in dem die funktionsrelevanten Teile angeordnet sind, zu vermeiden.

Vorteilhafte Weiterbildungen der erfindungsgemäßen Sensorvorrichtung zur Erfassung einer Bewegung eines Elements sind in den Unteransprüchen aufgeführt.

Um einerseits einen möglichst großen Freiheitsgrad hinsichtlich der Anordnung des insbesondere als Permanentmagnet ausgebildeten Magnetelements zu ermöglichen, und andererseits die Bewegung des zu detektierenden Elements unmittelbar auf das Magnetelement übertragen zu können, ist es vorgesehen, dass das erste Bauteil der Einrichtung zur Erzeugung der elektrischen Spannung, das durch das Magnetelement gebildet ist, mit einem Koppel- bzw. Übertragungselement verbunden ist, wobei das Koppel- bzw. Übertragungselement durch ein Federelement in Richtung des zu detektierenden Elements kraftbeaufschlagt ist. Durch die Kraftbeaufschlagung des Koppelelements mit dem Federelement wird die Möglichkeit geschaffen, dass es nicht erforderlich ist, das Koppelelement an dem zu detektierenden Element zu befestigen. Vielmehr stellt das Federelement sicher, dass ein unmittelbarer Anlagekontakt zwischen dem Koppelelement und dem zu detektierenden Element vorhanden ist.

Um es einerseits zu ermöglichen, dass das in Wirkverbindung mit dem zu detektierenden Element angeordnete Bauteil zur Erzeugung einer elektrischen Spannung eine möglichst geringe Masse aufweist, um die (Massen-)Trägeinheit des Bauteils zu reduzieren, und um es andererseits zu ermöglichen, dass das wenigstens eine Spulenelement ortsfest angeordnet werden kann, um eine Relativbewegung beispielsweise von Anschlussleitungen des wenigstens einen Spulenelements zu vermeiden, ist es vorgesehen, dass das erste Bauteil als Magnetelement ausgebildet ist, und dass das wenigstens eine Spulenelement, das das zweite Bauteil ausbildet, konzentrisch zum Magnetelement angeordnet ist.

Um das zu detektierende Element möglichst unmittelbar erfassen zu können und gleichzeitig eine möglichst gute bzw. einfach auszubildende Abdichtung des Gehäuses gegen den Eintritt von Medien zu erzielen, ist es vorgesehen, dass das Gehäuse eine Öffnung aufweist, durch die das Koppelelement hindurchragt.

In konstruktiv besonders bevorzugter, weil fertigungstechnisch einfach und somit preiswert herstellbarer Ausbildung ist es vorgesehen, dass das Koppelelement stiftförmig ausgebildet ist, und dass das Magnetelement als Ringmagnet ausgebildet ist, das auf einem Außenumfang des Koppelelements angeordnet ist.

In einer ersten konstruktiven Ausgestaltung der Erfindung, die durch die Verwendung lediglich eines einzigen Spulenelements hinsichtlich der Fertigung Kostenvorteile bietet, ist es vorgesehen, dass ein einziges Spulenelement vorgesehen ist, und dass das Magnetelement im von dem zu detektierenden Element nicht ausgelenkten Zustand in Bezug zu einer Längsachse des Spulenelements in einer Ebene außerhalb des Spulenelements angeordnet ist. Eine derartige Anordnung des Magnetelements zum Spulenelement hat den Vorteil, dass sich bei einer Bewegung des Magnetelements zum Spulenelement die magnetischen Feldlinien im Bereich des Spulenelements sehr stark ändern, so dass eine besonders gute bzw. einfache Auswertung der induzierten Spannung ermöglicht wird.

In einer weiteren bevorzugten konstruktiven Ausgestaltung, die insbesondere besonders hohe induzierte Spannungen ermöglicht, ist es vorgesehen, dass zwei Spulenelemente vorgesehen sind, dass die beiden Spulenelemente in Bezug zu einer gemeinsamen Längsachse axial voneinander beabstandet angeordnet sind, und dass das Magnetelement im von dem zu detektierenden Element nicht ausgelenkten Zustand in einer Ebene zwischen den beiden Spulenelementen angeordnet ist.

Die Erfindung umfasst auch einen Kraftstoffinjektor mit einer soweit beschriebenen erfindungsgemäßen Sensorvorrichtung, wobei die Sensorvorrichtung dazu dient, die Position eines Einspritzglieds, insbesondere einer Düsennadel des Kraftstoffinjektors zumindest mittelbar zu erfassen. Dadurch ist es möglich, mittels der Sensorvorrichtung die Ansteuerung des Kraftstoffinjektors zu optimieren, um damit beispielsweise über die Lebensdauer des Kraftstoffinjektors betrachtet stets gute Abgaswerte erzielen zu können.

In bevorzugter konstruktiver Anordnung der Sensorvorrichtung an dem Kraftstoffinjektor ist es vorgesehen, dass die Sensorvorrichtung im Bereich einer Kraftstoffversorgungsbohrung an der Oberfläche eines Injektorgehäuses des Kraftstoffinjektors angeordnet ist, dass die Wandstärke des Injektorgehäuses im Bereich des ersten Bauteils der Sensorvorrichtung (Magnetelement) reduziert ist, und dass das zu detektierende Element durch einen verformbaren Wandabschnitt des Injektorgehäuses gebildet ist. Somit wirkt der in der Dicke reduzierte, verformbare Wandabschnitt des Injektorgehäuses in Art einer Membran, deren Auslenkung bzw. Bewegung mittels der Sensorvorrichtung erfasst werden kann.

Um einen zuverlässige und eindeutige Positionierung des zu detektierenden Elements zum Magnetelement sicherzustellen, ist es vorgesehen, dass das Gehäuse der Sensorvorrichtung starr mit der Oberfläche des Injektorgehäuses verbunden ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte, teilweise geschnittene Seitenansicht eines erfindungsgemäßen Kraftstoffinjektors mit einer Sensorvorrichtung zur zumindest mittelbaren Erfassung des Kraftstoffdrucks im Kraftstoffinjektor,
- Fig. 2: eine erste konstruktive Ausgestaltung einer bei dem Kraftstoffinjektor gemäß Fig. 1 verwendeten Sensorvorrichtung unter Verwendung eines einzigen Spulenelements in einer Schnittdarstellung und
- Fig. 3: eine gegenüber Fig. 2 abgewandelte Sensorvorrichtung unter Verwendung zweier Spulenelemente, ebenfalls in einer Schnittdarstellung.

Gleiche Elemente bzw. Elemente mit gleicher Funktion sind in den Figuren mit den gleichen Bezugsziffern versehen.

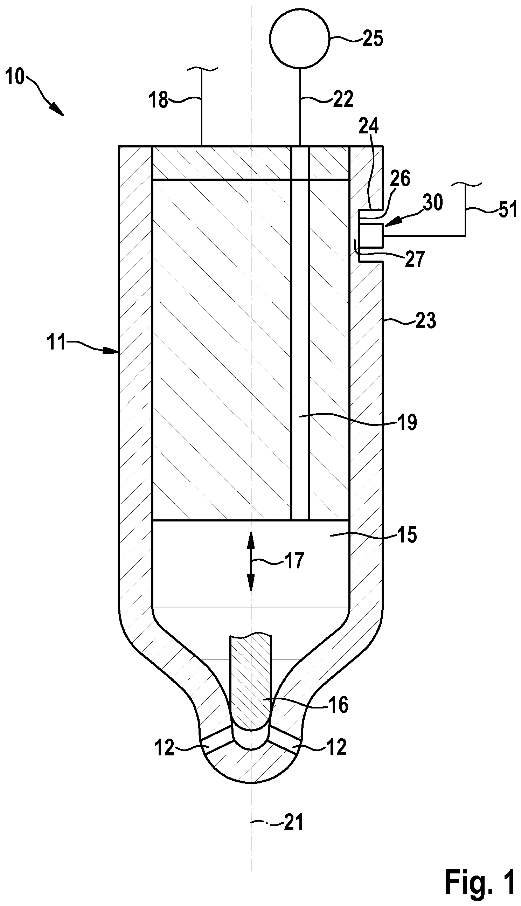

Der in der Fig. 1 stark vereinfacht dargestellte Kraftstoffinjektor 10 ist als sogenannter Common-Rail-Injektor ausgebildet, und dient dem Einspritzen von Kraftstoff in den nicht gezeigten Brennraum einer Brennkraftmaschine, insbesondere einer selbstzündenden Brennkraftmaschine.

Der Kraftstoffinjektor 10 weist ein im Wesentlichen aus Metall bestehendes, ggf. mehrteilig ausgebildetes Injektorgehäuse 11 auf, in dem auf der dem Brennraum der Brennkraftmaschine zugewandten Seite wenigstens eine, vorzugsweise mehrere Einspritzöffnungen 12 zum Einspritzen des Kraftstoffs eingeordnet sind. Innerhalb des Injektorgehäuses 11 bildet dieses einen Hochdruckraum 15 aus, in dem eine als Einspritzglied dienende Düsennadel 16 in Richtung des Doppelpfeils 17 hubbeweglich angeordnet ist. In der dargestellten, abgesenkten Stellung der Düsennadel 16 bildet diese zusammen mit der Innenwand des Hochdruckraums 15 bzw. des Injektorgehäuses 11 einen Dichtsitz aus, so dass die Einspritzöffnungen 12 zumindest mittelbar verschlossen sind, derart, dass das Einspritzen von Kraftstoff aus dem Hochdruckraum 15 in den Brennraum der Brennkraftmaschine vermieden wird. In der anderen, nicht dargestellten, von dem Dichtsitz abgehobenen Position der Düsennadel 16 gibt diese die Einspritzöffnungen 12 zum Einspritzen des Kraftstoffs in den Brennraum der Brennkraftmaschine frei. Die Bewegung der Düsennadel 16, insbesondere zum Freigeben der Einspritzöffnungen 12, erfolgt auf eine an sich bekannte Art und Weise mittels eines nicht dargestellten Aktuators, der über eine Spannungsversorgungsleitung 18 von einer Steuereinrichtung der Brennkraftmaschine ansteuerbar ist. Bei dem Aktuator kann es sich insbesondere um einen Magnetaktuator oder aber um einen Piezoaktuator handeln.

Die Versorgung des Hochdruckraums 15 mit unter Hochdruck (Systemdruck) stehendem Kraftstoff erfolgt über eine innerhalb des Injektorgehäuses 11 angeordnete bzw. in Bauteilen des Kraftstoffinjektors 10 ausgebildete Versorgungsbohrung 19, die insbesondere exzentrisch zur Längsachse 21 des Injektorgehäuses 11 in einem Randbereich des Kraftstoffinjektors 10, zumindest im Wesentlichen parallel zur Längsachse 21, verläuft. Die Versorgungsbohrung 19 ist darüber hinaus über einen nicht dargestellten Kraftstoffanschlussstutzen mit einer Kraftstoffleitung 22 verbunden, welche wiederum mit einem Kraftstoffspeicher 25 (Rail) gekoppelt ist.

In einem von den Einspritzöffnungen 12 axial relativ weit beabstandeten Bereich des Injektorgehäuses 11 ist in dessen Außenwand 23 beispielhaft eine sacklochförmige Vertiefung 24 ausgebildet, so dass die Wanddicke des Injektorgehäuses 11 im Bereich der Vertiefung 24 reduziert ist. Ergänzend wird erwähnt, dass anstelle einer sacklochförmigen Vertiefung 24 das Injektorgehäuse 11 auch eine Abflachung aufweisen kann, in deren Bereich die Wanddicke des Injektorgehäuses 11 reduziert ist.

Der eben ausgebildete Grund 26 der Vertiefung 24 bildet einen Teil eines Verformungsbereichs 27 aus. Dadurch wirkt der in der Versorgungsbohrung 19 augenblicklich herrschende Kraftstoffdruck in dem Injektorgehäuse 11 auch auf der der Vertiefung 24 abgewandten Seite. Dadurch, dass die Wanddicke des Injektorgehäuses 11 im Bereich der Vertiefung 24 reduziert ist, wirkt die Wand des Injektorgehäuses 11 auf der der Vertiefung 24 zugewandten Seite des Verformungsbereichs 27 in Art einer elastisch verformbaren Membran, wobei die Verformung, welche sich als konvexe Wölbung ausbildet, umso größer ist, je höher der augenblickliche Kraftstoffdruck in der Versorgungsbohrung 19 ist.

Zur Detektion des augenblicklichen Kraftstoffdrucks in der Versorgungsbohrung 19 und damit auch in dem Hochdruckraum 15, welcher als Indiz für die augenblickliche Stellung der Düsennadel 16 zur Ansteuerung der Düsennadel 16 verwendet wird, weist der Kraftstoffinjektor 10 eine Sensorvorrichtung 30 auf.

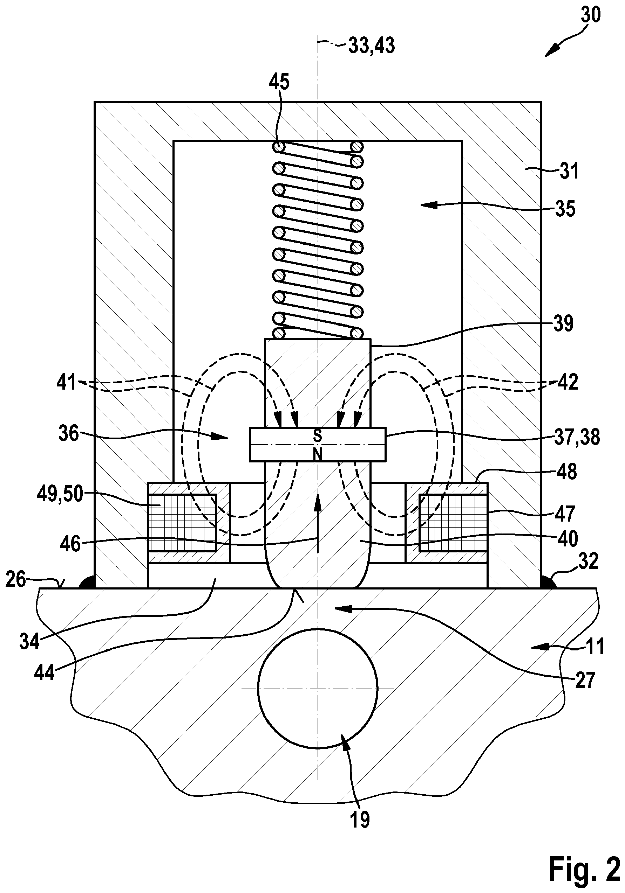

Wie insbesondere anhand der Fig. 2 erkennbar ist, umfasst die Sensorvorrichtung 30 ein Gehäuse 31, das entweder aus Metall oder aus Kunststoff besteht. Das Gehäuse 31 kann einteilig oder mehrteilig ausgebildet sein und ist mit dem Grund 26 des Injektorgehäuses 11 dicht verbunden, beispielsweise mittels einer in der Fig. 2 erkennbaren, radial umlaufenden Laserschweißnaht 32. Das im dargestellten Ausführungsbeispiel topfförmig ausgebildete Gehäuse 31 ist symmetrisch zu einer Längsachse 33 ausgebildet, wobei die Längsachse 33 die Versorgungsbohrung 19 zentrisch schneidet. Ferner weist das Gehäuse 31 auf der dem Grund 26 bzw. dem Injektorgehäuse 11 zugewandten Seite eine Öffnung 34 auf, die jedoch durch die Laserschweißnaht 32 bzw. das Gehäuse 31 gegenüber dem Zutritt von Medien abgedichtet ist. Innerhalb des Innenraums 35 des Gehäuses 31 ist eine Einrichtung 36 zur Erzeugung einer elektrischen Spannung angeordnet. Die Einrichtung 36 weist ein erstes Bauteil 37 mit einem Permanentmagnetelement in Form eines Ringmagneten 38 (alternativ kann beispielsweise auch ein Scheibenmagnet vorgesehen sein) auf, der auf einem Außenumfang 39 eines Koppelelements 40 angeordnet ist, beispielsweise durch Aufschrumpfen oder eine nicht dargestellte Klebeverbindung. Die Anordnung bzw. Ausbildung des Ringmagneten 38 ist im dargestellten Ausführungsbeispiel derart, dass dessen Nordpol N in Richtung des Grunds 26 des Injektorgehäuses 11 angeordnet ist, während der Südpol S des Ringmagneten 38 vom Grund 26 des Injektorgehäuses 11 wegragt. Der Ringmagnet 38 erzeugt die in der Fig. 2 ausschnittsweise dargestellten magnetischen Feldlinien 41, 42.

Das beispielsweise aus einem ferromagnetischen Material bestehende Koppelelement 40 ist stiftförmig ausgebildet, wobei die Längsachse 43 des Koppelelements 40 mit der Längsachse 33 des Gehäuses 31 zusammenfällt. Darüber hinaus ist die dem Grund 26 zugewandte Stirnseite 44 des Koppelelements 40 ballig ausgebildet. Das Koppelelement 40 ist von der Federkraft einer Druckfeder 45 in Richtung des Grunds 26 des Injektorgehäuses 11 kraftbeaufschlagt, derart, dass sich das Koppelelement 40 zusammen mit dem Ringmagneten 38 aus der in der Fig. 2 dargestellten Stellung, bei der in der Versorgungsbohrung 19 ein definierter Druck herrscht, in Richtung des Pfeils 46 vom Grund 26 wegbewegt, wenn der in der Versorgungsbohrung 19 herrschende Druck sich erhöht. Die Erhöhung des Drucks in der Versorgungsbohrung 19 bewirkt eine konvexe Wölbung im Bereich des Verformungsbereichs 27 relativ zum Ort der Befestigung des Gehäuses 31 am Grund 26 des Injektorgehäuses 11.

Die Innenwand des Gehäuses 31 weist einen im Durchmesser vergrößerten Abschnitt 47 auf, der eine Schulter 48 ausbildet. Gegen die Schulter 48 liegt axial eine als zweites Bauteil 49 ausgebildete Magnetspule 50 an, die Bestandteil der Einrichtung 36 ist. Die Magnetspule 50 weist lediglich in der Fig. 1 erkennbare Anschlussleitungen 51 auf, die beispielsweise mit einem Steuergerät des Kraftfahrzeugs verbunden sind. Über die Anschlussleitungen 51 wird eine von der Einrichtung 36 erzeugte Spannung beispielsweise an eine Auswerteeinrichtung weitergeleitet, um damit die Ansteuerung der Düsennadel 16 zu optimieren.

Die als Ringspule ausgebildete Magnetspule 50 ist konzentrisch zu den Längsachsen 23 bzw. 43 angeordnet und umgibt somit auch das Koppelelement 40 bzw. Ringmagneten 38 konzentrisch. Wie insbesondere anhand der Fig. 2 erkennbar ist, ist der Ringmagnet 38 in der in der Fig. 2 dargestellten, nicht ausgelenkten Stellung in einer Position oberhalb der Magnetspule 50 angeordnet.

Beim Betrieb des Kraftstoffinjektors 10 verformt sich der Verformungsbereich 27 des Injektorgehäuses 11 in Abhängigkeit des in der Versorgungsbohrung 19 herrschenden Kraftstoffdrucks elastisch nach außen. Diese Verformung bzw. Bewegung des Verformungsbereichs 27 wird mittels des Koppelelements 40 auf den Ringmagneten 38 übertragen, der sich daraufhin relativ zum ortsfest angeordneten zweiten Bauteil 49a bzw. zur Magnetspule 50 bewegt. Die Relativbewegung induziert in der Magnetspule 50 eine elektrische Spannung, die über die Anschlussleitungen 51 zumindest mittelbar ausgewertet werden kann. Auf Grundlage der Spannungshöhe bzw. des seitlichen Spannungsverlaufs kann dadurch zumindest mittelbar auf eine Stellung der Düsennadel 16 in dem Injektorgehäuse geschlossen werden.

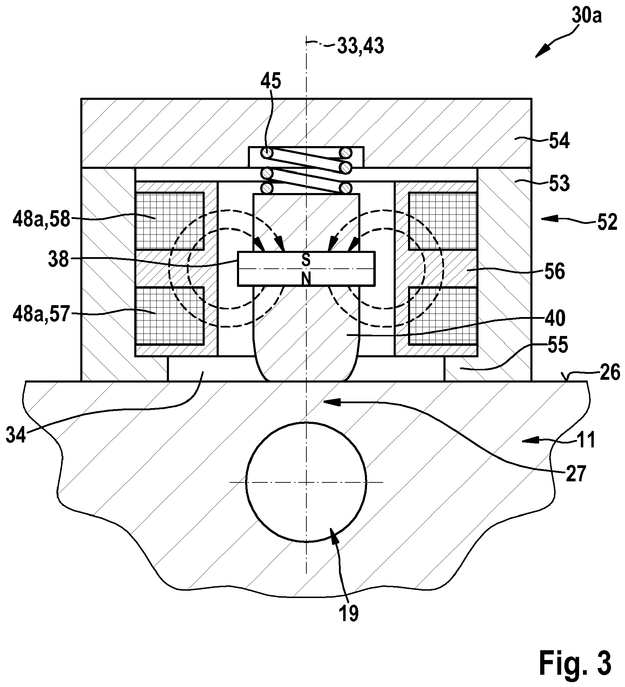

In der Fig. 3 ist eine gegenüber der Fig. 2 modifizierte Sensorvorrichtung 30a dargestellt. Die Sensorvorrichtung 30a weist ein im Ausführungsbeispiel zweiteilig ausgebildetes Gehäuse 52 auf. Das Gehäuse 52 hat ein in etwa hülsenförmig ausgebildetes erstes Gehäuseteil 53, das auf der dem Grund 26 abgewandten Seite von einem in etwa scheibenförmigen zweiten Gehäuseteil 54 überdeckt ist. Darüber hinaus weist das erste Gehäuseteil 53 im Bereich des Grunds 26 einen radial nach innen ragenden Rand 55 auf, der die Öffnung 34 radial begrenzt. Innerhalb des ersten Gehäuseteils 53 sind beispielhaft innerhalb eines gemeinsamen Spulenkörpers 56 zwei, axial in Bezug zur Längsachse 33 bzw. 43 axial voneinander beabstandete Magnetspulen 58, 59 angeordnet. Die beiden Magnetspulen 58, 59 bilden zusammen das zweite Bauteil 49a aus. Wesentlich ist, dass bei Verwendung lediglich eines einzigen Spulendrahts für die beiden Magnetspulen 58, 59 die Drahtwickelrichtung der beiden Magnetspulen 58, 59 unterschiedlich ausgebildet ist bzw. in unterschiedlicher Richtung verläuft. Darüber hinaus ist es aus der Fig. 3 erkennbar, dass der Ringmagnet 38 in einer Position, in der dieser von dem Verformungsbereich 27 nicht ausgelenkt ist, in einer axialen Position zwischen den beiden Magnetspulen 58, 59 angeordnet ist. Eine derartige Anordnung bzw. Drahtbewicklung der Magnetspulen 58, 59 bewirkt bei einem Anheben des Koppelelements 40 bzw. des Ringmagneten 38 aus der in der Fig. 3 dargestellten Position bei einer Deformation des Verformungsbereichs 27, dass die in den Magnetspulen 58, 59 durch den Ringmagneten 38 induzierten Spannungen sich addieren.

Die soweit beschriebene Sensorvorrichtung 30, 30a kann in vielfältiger Art und Weise abgewandelt bzw. modifiziert werden, ohne vom Erfindungsgedanken abzuweichen. Insbesondere erscheint es auch wesentlich darauf hinzuweisen, dass der Einsatz einer soweit beschriebenen Sensorvorrichtung 30, 30a nicht auf die Erfassung des Drucks in einer Versorgungsbohrung 19 eines Kraftstoffinjektors 10 beschränkt ist. Vielmehr können in allgemeiner Art und Weise Bewegungen eines Elementes (im dargestellten Ausführungsbeispiel die Bewegung eines Verformungsbereichs 27) mittels der Sensorvorrichtung 30, 30a erfasst werden.

## Patentansprüche

1. Sensorvorrichtung (30; 30a) zur Erfassung einer Bewegung eines Elements (27), mit einer Einrichtung (36) zur Induktion einer elektrischen Spannung, wobei die Einrichtung (36) zumindest ein in Wirkverbindung mit dem Element (27) angeordnetes erstes Bauteil (37) in Form eines Magnetelements (38) aufweist, das mit wenigstens einem ortsfest angeordneten, als Spulenelement (50; 57, 58) ausgebildeten zweiten Bauteil (49; 49a) zusammenwirkt, wobei die Einrichtung (36) in einem Gehäuse (31; 52) angeordnet ist, das zur zumindest mittelbaren Befestigung an dem Element (27) ausgebildet ist, und wobei das Gehäuse (31; 52) mediendicht ausgebildet ist.

2. Sensorvorrichtung nach Anspruch 1,
**dadurch gekennzeichnet**,
das Gehäuse (31; 52) als geschlossenes Gehäuse (31; 52) ausgebildet ist, oder dass das Gehäuse (31; 52) in einem Bereich, in dem das erste Bauteil (37) zumindest mittelbar mit dem Element (27) zusammenwirkt, eine Öffnung (34) aufweist.

3. Sensorvorrichtung nach Anspruch 1 oder 2,
**dadurch gekennzeichnet,**
**dass** das Magnetelement (38) als Permanentmagnetelement ausgebildet ist.

4. Sensorvorrichtung nach einem der Ansprüche 1 bis 3,
**dadurch gekennzeichnet,**
**dass** das erste Bauteil (37) mit einem Koppelelement (40) verbunden ist, das durch ein Federelement (45) in Richtung des Elements (27) kraftbeaufschlagt ist.

5. Sensorvorrichtung nach einem der Ansprüche 1 bis 4,
**dadurch gekennzeichnet,**
**dass** das wenigstens eine Spulenelement (50; 57, 58) konzentrisch zum Magnetelement (38) angeordnet ist.

6. Sensorvorrichtung nach Anspruch 4 oder 5,
**dadurch gekennzeichnet,**
**dass** das Koppelelement (40) unmittelbar mit dem Element (27) zusammenwirkt.

7. Sensorvorrichtung nach einem der Ansprüche 4 bis 6,
**dadurch gekennzeichnet,**
**dass** das Koppelelement (40) stiftförmig ausgebildet ist, und dass das Magnetelement (38) als Ringmagnet ausgebildet ist, das auf einem Außenumfang (39) des Koppelelements (40) ortsfest angeordnet ist.

8. Sensorvorrichtung nach einem der Ansprüche 5 bis 7,
**dadurch gekennzeichnet,**
**dass** ein einziges Spulenelement (50) vorgesehen ist, und dass das Magnetelement (38) im von dem Element (27) nicht ausgelenkten Zustand in Bezug zu einer Längsachse (43) des Magnetelements (38) in einer Ebene außerhalb des Spulenelements (50) angeordnet ist.

9. Sensorvorrichtung nach einem der Ansprüche 5 bis 7,
**dadurch gekennzeichnet,**
**dass** zwei Spulenelemente (57, 58) vorgesehen sind, dass die beiden Spulenelemente (57, 58) in Bezug zu einer Längsachse (43) des Magnetelements (38) axial voneinander beabstandet angeordnet sind, und dass das Magnetelement (38) im von dem Element (27) nicht ausgelenkten Zustand in einer Ebene zwischen den beiden Spulenelementen (57, 58) angeordnet ist.

10. Kraftstoffinjektor (10) mit einer Sensorvorrichtung (30; 30a) nach einem der Ansprüche 1 bis 9 zur zumindest mittelbaren Erfassung der Position eines Einspritzglieds (16) des Kraftstoffinjektors (10).

11. Kraftstoffinjektor nach Anspruch 10,
**dadurch gekennzeichnet,**
**dass** die Sensorvorrichtung (30; 30a) im Bereich einer Kraftstoffversorgungsbohrung (19) an der Oberfläche (26) eines Injektorgehäuses (11) angeordnet ist, dass die Wandstärke des Injektorgehäuses (11) im Bereich des ersten Bauteils (37) der Sensorvorrichtung (30; 30a) reduziert ist, und dass das Element (27) durch einen verformbaren Wandabschnitt des Injektorgehäuses (11) gebildet ist.

12. Kraftstoffinjektor nach Anspruch 11,
**dadurch gekennzeichnet,**
**dass** das Gehäuse (31; 52) der Sensorvorrichtung (30; 30a) starr mit der Oberfläche (26) des Injektorgehäuses (11) verbunden ist.
